# FASCICULE DE BREVET EUROPEEN

(11) **EP 3 084 175 B1**
(45) Date de publication et mention de la délivrance du brevet: **17.06.2020**
(21) Numéro de dépôt: 14827845.0
(22) Date de dépôt: 15.12.2014
(51) Int. Cl.: F02C 6/02, B64D 31/06, F02C 6/20, F02C 9/28

(54) **PROCEDE DE COMMANDE AUTOMATIQUE DU REGIME DE FONCTIONNEMENT D'UN TURBOMOTEUR D'UN HELICOPTERE, DISPOSITIF DE COMMANDE CORRESPONDANT ET HELICOPTERE EQUIPE D'UN TEL DISPOSITIF**
VERFAHREN ZUR AUTOMATISCHEN STEUERUNG DER BETRIEBSGESCHWINDIGKEIT EINES HUBSCHRAUBERWELLENTRIEBWERKS, ZUGEHÖRIGES STEUERUNGSVERFAHREN UND MIT SOLCH EINER VORRICHTUNG AUSGESTATTETER HUBSCHRAUBER
METHOD FOR AUTOMATICALLY CONTROLLING THE OPERATING SPEED OF A HELICOPTER TURBOSHAFT ENGINE, CORRESPONDING CONTROL DEVICE AND HELICOPTER PROVIDED WITH SUCH A DEVICE

(30) Priorité: 20.12.2013 FR 1363316
(43) Date de publication de la demande: 26.10.2016
(73) Titulaire: Safran Helicopter Engines, 64510 Bordes (FR)
(72) Inventeur: SEVE, Caroline, 77550 Moissy-Cramayel (FR); POUMAREDE, Vincent, F-65000 Tarbes (FR); THIRIET, Romain, F-64110 Jurancon (FR)
(74) Mandataire: Gevers & Orès
(86) Numéro de dépôt international: PCT/FR2014/053351
(87) Numéro de publication internationale: WO 2015/092252

(56) Documents cités:
- EP-A1- 2 301 844
- EP-A1- 2 626 537
- WO-A2-2012/059671
- WO-A2-2013/076434

## Description

### 1. Domaine technique de l'invention

L'invention concerne un procédé de commande automatique du régime de fonctionnement d'au moins un turbomoteur d'un hélicoptère. L'invention concerne également un dispositif de commande correspondant et un hélicoptère équipé d'un tel dispositif de commande. L'invention concerne en particulier un procédé de commande d'un turbomoteur d'un hélicoptère lors de toutes les phases de missions qu'il effectue, en dehors des situations critiques de vol.

### 2. Arrière-plan technologique

Un hélicoptère est en général équipé d'au moins deux turbomoteurs qui fonctionnent à des régimes qui dépendent des conditions de vol de l'hélicoptère. Dans tout le texte qui suit, un hélicoptère est dit en situation de vol de croisière lorsqu'il évolue dans des conditions normales, en régime connue sous l'acronyme anglais AEO (*All Engines Operative*), au cours de toutes les phases du vol, hors phases transitoires de décollage, de montée, d'atterrissage ou de vol stationnaire. Dans tout le texte qui suit, un hélicoptère est dit en situation critique de vol lorsqu'il est nécessaire qu'il dispose de la puissance totale installée, c'est-à-dire dans les phases transitoires de décollage, de montée, d'atterrissage et de régime dans lequel un des turbomoteurs est défaillant, désigné par l'acronyme anglais OEI (*One Engine Inoperative*)*.*

Il est connu que lorsque l'hélicoptère est en situation de vol de croisière, les turbomoteurs fonctionnent à des niveaux de puissance faibles, inférieurs à leur puissance maximale continue (ci-après, PMC). Dans certaines configurations, la puissance fournie par les turbomoteurs, lors d'un vol de croisière, peut être inférieure à 50 % de la puissance maximale de décollage (ci-après, PMD). Ces faibles niveaux de puissance entraînent une consommation spécifique (ci-après, *Cs*) définie comme le rapport entre la consommation horaire de carburant par la chambre de combustion du turbomoteur et la poussée fournie par ce turbomoteur, supérieure de l'ordre de 30% à la Cs de la PMD, et donc une surconsommation en carburant en vol de croisière.

Enfin, lors des phases d'attente au sol, les pilotes préfèrent généralement mettre les différents turbomoteurs au ralenti sol afin d'être sûrs de pouvoir les redémarrer. Les turbomoteurs continuent alors de consommer du carburant bien qu'ils ne fournissent aucune puissance.

En outre, les turbomoteurs d'un hélicoptère sont conçus de manière surdimensionnée pour pouvoir maintenir l'hélicoptère en vol en cas de panne de l'un des moteurs. Cette situation de vol correspond au régime OEI décrit ci-dessus. Cette situation de vol survient suite à la perte d'un moteur et se traduit par le fait que chaque moteur valide fournit une puissance bien au-delà de sa puissance nominale pour permettre à l'hélicoptère de faire face à une situation périlleuse, puis de pouvoir poursuivre son vol. La consommation de carburant par chaque turbomoteur valide est alors sensiblement augmentée en situation OEI pour fournir ce surcroît de puissance.

D'autre part, les turbomoteurs sont également surdimensionnés pour pouvoir assurer le vol dans tout le domaine de vol spécifié par l'avionneur et notamment le vol à des altitudes élevées et par temps chaud. Ces points de vol, très contraignants, notamment lorsque l'hélicoptère a une masse proche de sa masse maximale de décollage, ne sont rencontrés que dans certains cas d'utilisation de certains hélicoptères. De ce fait, certains turbomoteurs, bien que dimensionnés pour pouvoir fournir de telles puissances ne voleront jamais dans de telles conditions.

Ces turbomoteurs surdimensionnés sont pénalisants en termes de masse et de consommation de carburant. Afin de réduire cette consommation dans tous les cas de vol décrits ci-dessus (vol de croisière, régime OEI, taxiing, vol stationnaire ou attente au sol), il est possible d'arrêter l'un des turbomoteurs et de le placer en régime, dit de veille. Le ou les moteurs actifs fonctionnent alors à des niveaux de puissance plus élevés pour fournir toute la puissance nécessaire et donc à des niveaux de Cs plus favorables. Cependant, cette pratique est contraire aux règles de certification actuelles, et les turbomoteurs ne sont pas conçus pour garantir un taux de fiabilité de redémarrage compatible avec les normes de sûreté. De même, les pilotes ne sont actuellement pas sensibilisés ni familiarisés avec la perspective de mettre en veille un turbomoteur en vol.

En outre, la durée de redémarrage du turbomoteur en veille est typiquement de l'ordre de trente secondes. Cette durée peut s'avérer trop longue pour certaines conditions de vol, par exemple à faible hauteur de vol avec une défaillance partielle ou totale du moteur initialement actif. Si le moteur en veille ne redémarre pas à temps, l'atterrissage avec le moteur en difficulté peut s'avérer critique ou bien conduire à une perte de puissance totale.

Plus généralement, la disponibilité immédiate de la puissance d'un seul turbomoteur comporte des risques dans toutes les situations de vol où il est nécessaire de fournir un surcroît de puissance qui impose, en termes de sécurité, de pouvoir disposer de l'ensemble de la puissance des turbomoteurs. Un procédé de commande du régime de fonctionnement d'un turbomoteur d'un hélicoptère est divulgué dans WO2012/059671 A2.

Les demandeurs ont proposé dans les demandes FR1151717 et FR1359766, des procédés d'optimisation de la consommation spécifique des turbomoteurs d'un hélicoptère par la possibilité de placer au moins un turbomoteur dans un régime de vol stabilisé, dit continu, et au moins un turbomoteur dans un régime de veille particulier duquel il peut sortir de manière urgente ou normale, selon les besoins. Une sortie du régime de veille est dite normale lorsqu'un changement de situation de vol impose l'activation du turbomoteur en veille, par exemple lorsque l'hélicoptère va passer d'une situation de vol de croisière à une phase d'atterrissage. Une telle sortie de veille normale s'effectue sur une durée de 10s à 1 min. Une sortie du régime de veille est dite urgente lorsqu'une panne ou un déficit de puissance du moteur actif intervient ou que les conditions de vol deviennent soudainement difficiles. Une telle sortie de veille d'urgence s'effectue sur une durée inférieure à 10s.

Les demandeurs ont donc proposé les cinq régimes de veille suivants :
- un régime de veille, dit ralenti usuel, dans lequel la chambre de combustion est allumée et l'arbre du générateur de gaz tourne à une vitesse comprise entre 60 et 80% de la vitesse nominale,
- un régime de veille, dit super-ralenti usuel, dans lequel la chambre de combustion est allumée et l'arbre du générateur de gaz tourne à une vitesse comprise entre 20 et 60% de la vitesse nominale,
- un régime de veille, dit super-ralenti assisté, dans lequel la chambre de combustion est allumée et l'arbre du générateur de gaz tourne, assisté mécaniquement, à une vitesse comprise entre 20 et 60% de la vitesse nominale,
- un régime de veille, dit vireur, dans lequel la chambre de combustion est éteinte et l'arbre du générateur de gaz tourne, assisté mécaniquement, à une vitesse comprise entre 5 et 20% de la vitesse nominale ;
- un régime de veille, dit d'arrêt, dans lequel la chambre de combustion est éteinte et l'arbre moteur est à l'arrêt complet.

Il se pose maintenant le problème technique de définir quel turbomoteur doit être mis en régime de veille. Il se pose également le problème technique de déterminer quel régime de veille doit être sélectionné parmi l'ensemble des régimes de veille disponibles. Il se pose également le problème technique de pouvoir passer d'un régime de veille à un autre selon les conditions de vol de l'hélicoptère. Il se pose également le problème technique de la sortie des régimes de veille et du retour vers un régime nominal de fonctionnement.

### 3. Objectifs de l'invention

L'invention vise à fournir une solution efficace et économique à ce problème technique.

En particulier, l'invention vise à fournir, dans au moins un mode de réalisation de l'invention, un procédé de commande du régime de fonctionnement d'un turbomoteur d'un hélicoptère selon la revendication 1.

L'invention vise aussi à fournir, un dispositif de commande selon la revendication 5.

### 4. Exposé de l'invention

Un procédé selon l'invention permet donc de choisir automatiquement un régime de fonctionnement d'un turbomoteur d'un hélicoptère parmi une pluralité de régimes prédéterminés. Le choix du régime est fonction de données représentatives du vol de l'hélicoptère. Ainsi, un procédé de commande selon l'invention permet d'adapter le régime moteur à l'évolution des données représentatives du vol de l'hélicoptère. Un procédé selon l'invention permet donc de passer d'un régime de fonctionnement à un autre plus favorable (ou moins favorable) si les données représentatives du vol le permettent ou l'imposent.

L'invention est particulièrement adaptée au choix d'un régime de veille pour le turbomoteur lorsque l'hélicoptère est en situation de vol de croisière. En fonction des valeurs de données représentatives du vol de l'hélicoptère, le procédé peut commander la mise en veille de ce turbomoteur et/ou le changement de mode de veille et/ou sa sortie de veille si les conditions l'imposent.

Avantageusement, un procédé selon l'invention comprend une étape d'attribution à chaque donnée reçue d'un régime de fonctionnement choisi parmi la pluralité des régimes de fonctionnement, dit régime désigné, qui dépend de la valeur de ladite donnée.

Avantageusement et selon cette variante, à chaque valeur que peut prendre chaque donnée, correspond un seul et unique régime désigné. Autrement dit, un régime désigné est associé à un intervalle de valeurs unique de chaque donnée.

Un procédé selon cette variante permet donc d'attribuer à chaque donnée reçue et analysée, un régime de fonctionnement désigné qui dépend de la valeur de la donnée. En d'autres termes, l'invention prévoit un abaque prédéterminé qui associe à chaque valeur possible de cette donnée, un régime prédéterminé. Ces associations sont invariantes et réalisées de manière à ce que le régime désigné soit le régime de fonctionnement le plus économe en carburant que la valeur de la donnée permette.

Avantageusement et selon l'invention, ladite étape de détermination dudit régime élu consiste à choisir un régime parmi l'ensemble des régimes désignés fournis par ladite étape d'attribution, selon un ordre de priorité prédéterminé.

Avantageusement et selon l'invention, la pluralité de régimes de fonctionnement prédéterminés d'un turbomoteur comprenant une chambre de combustion et un arbre générateur de gaz comprend au moins les régimes suivants :
- un régime de veille, dit ralenti usuel, dans lequel ladite chambre de combustion est allumée et ledit arbre du générateur de gaz tourne à une vitesse comprise entre 60 et 80% de la vitesse nominale,
- un régime de veille, dit super-ralenti usuel, dans lequel ladite chambre de combustion est allumée et ledit arbre du générateur de gaz tourne à une vitesse comprise entre 20 et 60% de la vitesse nominale,
- un régime de veille, dit super-ralenti assisté, dans lequel ladite chambre de combustion est allumée et ledit arbre du générateur de gaz tourne, assisté mécaniquement, à une vitesse comprise entre 20 et 60% de la vitesse nominale,
- un régime de veille, dit vireur, dans lequel ladite chambre de combustion est éteinte et ledit arbre du générateur de gaz tourne, assisté mécaniquement, à une vitesse comprise entre 5 et 20% de la vitesse nominale,
- un régime de veille, dit d'arrêt, dans lequel ladite chambre de combustion est éteinte et ledit arbre du générateur de gaz est à l'arrêt complet,
- un régime de sortie de veille d'urgence, dans lequel la chambre de combustion est allumée et l'arbre du générateur de gaz est entraîné vers une vitesse comprise entre 80 et 105%, dans un délai inférieur à 10s après une commande de sortie de veille,
- un régime de sortie de veille normale, dans lequel la chambre de combustion est alllumée et l'arbre du générateur de gaz est entraîné vers une vitesse comprise entre 80 et 105%, dans un délai compris entre 10s et 1min après une commande de sortie de veille,
- un régime nominal de fonctionnement, dans lequel la chambre de combustion est allumée et l'arbre du générateur de gaz est entraîné à une vitesse comprise entre 80 et 105%.

Un procédé selon l'invention permet donc de commander le passage du turbomoteur dans au moins un régime de fonctionnement choisi parmi une pluralité de régimes de veille, un régime de sortie de veille d'urgence, un régime de sortie de veille normale, et un régime nominal de fonctionnement.

Avantageusement et selon l'invention, ledit ordre de priorité prédéterminé est le suivant :
- régime nominal de fonctionnement,
- régime de sortie de veille d'urgence,
- régime de sortie de veille normale,
- régime de ralenti usuel,
- régime de super-ralenti usuel,
- régime de super-ralenti assisté,
- régime vireur,
- régime d'arrêt.

En d'autres termes, l'étape de détermination dudit régime élu consiste à choisir le régime parmi l'ensemble desdits régimes désignés fournis par ladite étape d'attribution, par ordre de priorité suivant: régime nominal de fonctionnement, régime de sortie de veille d'urgence, régime de sortie de veille normale, régime de ralenti usuel, régime de super-ralenti usuel, régime de super-ralenti assisté, régime vireur et régime d'arrêt.

Selon cette variante, l'étape de détermination choisit, parmi l'ensemble des régimes désignés, associés à chacune des données et fournis par l'étape d'attribution, le régime qui est le plus prioritaire. L'ordre de priorité des régimes a été défini de telle sorte que la sécurité du vol soit toujours garantie et soit toujours maximale. C'est la raison pour laquelle le régime le plus prioritaire est le régime nominal de fonctionnement. C'est le régime dans lequel le turbomoteur peut fonctionner à plein régime et donc où toute la puissance installée est disponible immédiatement. Le régime le plus prioritaire suivant est le régime de sortie de veille d'urgence qui a pour but de basculer rapidement vers le régime nominal de fonctionnement. Le régime le plus prioritaire suivant est le régime de sortie de veille normale, puis le régime de ralenti usuel, puis le régime de super-ralenti usuel, puis le régime de super-ralenti assisté, puis le régime vireur, et enfin le régime d'arrêt.

En d'autres termes et à titre d'exemple, si la valeur d'au moins une des données analysées se situe dans l'intervalle de valeurs associé au régime nominal de fonctionnement, le régime élu sera nécessairement le régime nominal de fonctionnement. Autrement dit dans cet exemple, le dispositif de commande ne permet pas au moteur de se mettre en veille car une des conditions surveillées indique que l'hélicoptère doit pouvoir disposer de la pleine puissance du turbomoteur afin d'assurer des conditions de sécurité optimales.

Selon un autre exemple, si la valeur d'au moins une des données analysées désigne le mode de sortie de veille d'urgence et que le régime courant de fonctionnement n'est pas le régime nominal de fonctionnement, le régime élu sera nécessairement le mode de sortie de veille d'urgence. En effet, cela traduit que le régime de fonctionnement actuel du turbomoteur ne permet pas d'assurer un niveau de sécurité adéquat avec un moins une des conditions surveillées. Celle-ci impose donc une sortie d'urgence du régime de veille en cours pour basculer vers le régime nominal de fonctionnement.

Selon un autre exemple, si la valeur d'une des données analysées désigne le régime de super-ralenti assisté et qu'aucune autre valeur ne désigne un régime de fonctionnement plus prioritaire (i.e : qu'aucune valeur ne désigne ni le régime nominal, ni le régime de sortie de veille d'urgence, ni le régime de sortie de veille normale, ni le régime de ralenti usuel, ni le régime de super-ralenti usuel), alors, le régime de super-ralenti assisté est le régime élu et le turbomoteur est placé en régime de super-ralenti assisté.

Un procédé selon l'invention surveille en permanence l'ensemble des données représentatives du vol de l'hélicoptère et adapte automatiquement le régime de fonctionnement de l'hélicoptère à l'évolution des conditions.

Un procédé selon l'invention permet donc d'optimiser la sécurité du vol en choisissant en permanence le régime de fonctionnement le plus adapté à la situation rencontrée.

En outre, un procédé selon l'invention contribue à optimiser les consommations de carburant en cherchant en permanence à placer les moteurs dans le régime le plus favorable possible, tout en garantissant la sécurité du vol. L'ordre des régimes les plus favorables et donc les plus économes en carburant est l'ordre inverse de celui des régimes prioritaires : régime d'arrêt, régime vireur, régime de super-ralenti assisté, régime de super-ralenti usuel, régime de ralenti usuel, régime de sortie de veille normale, régime de sortie de veille d'urgence et régime nominal de fonctionnement.

Si le régime élu est différent du régime en cours, le procédé selon l'invention impose automatiquement au turbomoteur de basculer dans le régime élu. Cela permet également de tendre vers le régime le plus favorable en termes de consommation de carburant si les conditions de vol le permettent ou de rester dans des conditions de sécurité optimales.

Bien évidemment, si aucun régime de veille n'est possible, le turbomoteur reste dans un régime nominal de fonctionnement et aucune veille n'est possible tant que les données ne le permettent pas.

Avantageusement et selon l'invention, les données représentatives du vol de l'hélicoptère comprennent des données de conditions de vol de l'hélicoptère et/ou des données de conditions environnementales de l'hélicoptère et/ou des données d'état dudit turbomoteur.

Les données de conditions de vol de l'hélicoptère sont par exemple des données représentatives de la vitesse d'avancement de l'hélicoptère, de la consommation de carburant, du niveau de servitudes, de la marge de puissance disponible par rapport aux limitations du turbomoteur en fonctionnement, etc.

Les données de conditions environnementales sont par exemple des données représentatives de la température extérieure, de la pression extérieure, de la hauteur par rapport au sol, de l'humidité, des conditions atmosphériques (pluie, givre, vent, orage, etc.), de la présence d'obstacles à proximité, etc.

Les données d'état du turbomoteur sont par exemple des données représentatives du niveau d'endommagement du turbomoteur, de l'état de la turbine, de l'état des organes non propulsifs du power-pack (machines électriques, électroniques de puissance, machines hydrauliques, pneumatiques, pyrotechniques), de l'état des moyens de stockage d'énergie destinée au démarrage d'urgence, de la gestion des pannes, etc.

Les données représentatives du vol de l'hélicoptère peuvent donc comprendre toutes les données ci-dessus citées ainsi que la variation de ces mêmes données, comme par exemple la variation de l'altitude par rapport au sol ou la variation de la vitesse d'avancement.

Un procédé selon l'invention permet donc de prendre en compte une pluralité de données différentes et d'en déduire un régime de fonctionnement du turbomoteur adapté à la situation de vol de l'hélicoptère.

Avantageusement, un procédé selon l'invention comprend en outre une étape de sélection d'un turbomoteur parmi lesdits turbomoteurs dudit hélicoptère, pour lequel un changement de régime serait le plus pertinent.

Selon cette variante avantageuse, le procédé détermine parmi l'ensemble des turbomoteurs de l'hélicoptère, celui qui peut potentiellement être mis dans un régime plus favorable, notamment en veille. Cette sélection peut par exemple être déterminée en fonction de l'usure de chaque turbomoteur, le turbomoteur le plus usé étant alors sélectionné pour être mis en veille si les données représentatives du vol de l'hélicoptère le permettent. Cette sélection peut également consister à choisir alternativement chaque turbomoteur de telle sorte que lors de la première veille possible, un premier turbomoteur est choisi au cours de l'étape de sélection et lors de la deuxième veille possible, un deuxième turbomoteur est choisi au cours de l'étape de sélection, et ainsi de suite.

L'invention concerne également un dispositif de commande automatique d'un régime de fonctionnement d'un turbomoteur d'un hélicoptère selon la revendication 5.

Un dispositif de commande selon l'invention met avantageusement en œuvre un procédé selon l'invention et un procédé selon l'invention est avantageusement mis en œuvre par un dispositif selon l'invention.

Dans tout le texte, on désigne par module, un élément logiciel, un sous-ensemble d'un programme logiciel, pouvant être compilé séparément, soit pour une utilisation indépendante, soit pour être assemblé avec d'autres modules d'un programme, ou un élément matériel, ou une combinaison d'un élément matériel et d'un sous-programme logiciel. Un tel élément matériel peut comprendre un circuit intégré propre à une application (plus connue sous l'acronyme ASIC pour la dénomination anglaise *Application-Specific Integrated Circuit*) ou un circuit logique programmable ou tout matériel équivalent. D'une manière générale, un module est donc un élément (logiciel et/ou matériel) qui permet d'assurer une fonction.

Avantageusement, un dispositif selon l'invention comprend un module d'attribution à chaque donnée reçue par ledit module de réception d'un régime de fonctionnement choisi parmi ladite pluralité de régimes de fonctionnement, dit régime désigné, qui dépend de la valeur de ladite donnée.

Avantageusement et selon l'invention, ledit module de détermination d'un régime élu est configuré pour choisir le régime élu parmi l'ensemble desdits régimes désignés fournis par ledit module d'attribution, selon un ordre de priorité prédéterminé.

Avantageusement, un dispositif de commande selon l'invention comprend en outre un module de sélection du turbomoteur parmi lesdits turbomoteurs dudit hélicoptère, pour lequel un changement de régime serait le plus pertinent.

L'invention concerne également un hélicoptère comprenant au moins deux turbomoteurs, chaque turbomoteur comprenant une turbine à gaz piloté par un dispositif de régulation, caractérisé en ce qu'il comprend un dispositif de commande selon l'invention.

Avantageusement et selon l'invention, le dispositif de commande est logé dans ledit dispositif de régulation de chaque turbomoteur.

Avantageusement et selon une autre variante, le dispositif de commande communique par liaison sans fil avec chaque dispositif de régulation de chaque turbomoteur.

L'invention concerne également un procédé de commande, un dispositif de commande et un hélicoptère équipé d'un tel dispositif de commande caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un procédé de commande du régime de fonctionnement d'un turbomoteur selon un mode de réalisation de l'invention,
- la figure 2 est une vue schématique de l'abaque nécessaire à l'étape d'attribution d'un régime de fonctionnement désigné à une donnée, en fonction de la valeur de cette donnée, dans un procédé selon un mode de réalisation de l'invention,

- la figure 3 est une vue schématique d'un dispositif de commande selon un mode de réalisation de l'invention,
- la figure 4 est une vue schématique d'une architecture organique d'un hélicoptère selon un mode de réalisation de l'invention,
- la figure 5 est une vue schématique d'une autre architecture organique d'un hélicoptère selon un mode de réalisation de l'invention,
- la figure 6 est une vue schématique d'une autre architecture organique d'un hélicoptère selon un mode de réalisation de l'invention.

### 6. Description détaillée d'un mode de réalisation de l'invention

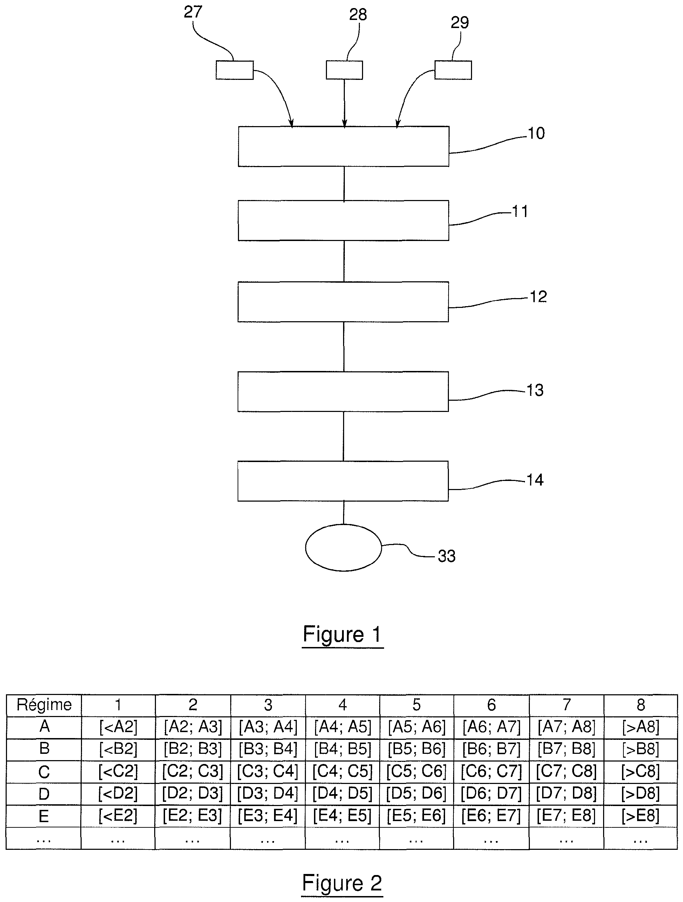

Un procédé selon l'invention comprend, tel que représenté sur la figure 1, une étape 10 de réception de données représentatives du vol de l'hélicoptère. Les données reçues sont, selon le mode de réalisation des figures, des données 27 de conditions de vol de l'hélicoptère, des données 28 de conditions environnementales de l'hélicoptère et des données 29 d'état du turbomoteur.

Le procédé comprend également selon le mode de réalisation avantageux des figures une étape 11 de sélection du turbomoteur pour lequel un changement de régime serait le plus pertinent. Il comprend également selon le mode avantageux de la figure 1, une étape 12 d'attribution à chaque donnée reçue d'un régime, dit régime désigné, choisi parmi une pluralité de régimes de fonctionnement prédéterminés en fonction de la valeur de ladite donnée. Il comprend également une étape 13 de détermination d'un régime de fonctionnement du turbomoteur, dit régime élu, choisi parmi l'ensemble des régimes désignés obtenus à l'étape 12 d'attribution selon un ordre de priorité prédéterminé. Enfin, il comprend une étape 14 de commande du régime de fonctionnement du turbomoteur au régime élu.

La figure 2 illustre schématiquement le principe de l'étape 12 d'attribution d'un régime de fonctionnement désigné à chaque type de donnée reçue.

La première ligne du tableau de la figure 2 comprend l'ensemble des régimes prédéterminés. Ils sont au nombre de huit suivant ce mode de réalisation. Mais bien entendu, selon d'autres modes de réalisation, le nombre de régimes prédéterminés attribuables aux données peut être différent.

A chaque intervalle de valeur de chaque donnée, correspond un régime désigné prédéterminé. Les intervalles sont bornés par des valeurs jointives et croissantes. Par exemple, si l'on considère la donnée référencée A, on aura A2<A3<A4<A5<A6<A7<A8. En fonction de la valeur de la donnée, correspond ainsi un seul et unique régime désigné.

Par exemple, si l'on considère la donnée référencée A, le régime de fonctionnement désigné pour cette donnée A sera le régime 4 si la valeur de A est comprise dans l'intervalle [A4 ; A5].

A l'issue de cette étape d'attribution 12, un régime est attribué à chaque donnée reçue au cours de l'étape 10 de réception.

Prenons l'exemple de cinq types de données reçues A, B, C, D et E dont les valeurs tombent respectivement dans les intervalles [A4 ; A5], [B2 ; B3] ; [C4 ; C5], [D5 ; D6] et [E6 ; E7].

A l'issue de l'étape 12 d'attribution, les données A, B, C, D et E sont donc associées respectivement aux régimes 4 ; 2 ; 4 ; 5 et 6.

Les régimes sont ordonnés par ordre de priorité prédéterminé.

Selon le mode de réalisation des figures, les régimes de fonctionnement suivants sont possibles et ordonnés de la manière suivante.

Le régime le plus prioritaire est le régime nominal de fonctionnement, dans lequel la chambre de combustion est allumée et l'arbre du générateur de gaz est entraîné entre 80 et 105%. Ce régime est référencé comme le régime 8 sur la figure 2.

Le régime à la priorité suivante est le régime de sortie de veille d'urgence, dans lequel la chambre de combustion doit être allumée si elle ne l'est pas déjà et l'arbre du générateur de gaz est entraîné vers la vitesse nominale, dans un délai inférieur à 10s après une commande de sortie de veille. Ce régime est référencé comme le régime 7 sur la figure 2.

Le régime à la priorité suivante est le régime de sortie de veille normale, dans lequel la chambre de combustion doit être allumée si elle ne l'est pas déjà et l'arbre du générateur de gaz est entraîné vers la vitesse nominale, dans un délai compris entre 10s et 1min après une commande de sortie de veille. Ce régime est référencé comme le régime 6 sur la figure 2.

Le régime à la priorité suivante est le régime de veille, dit ralenti usuel, dans lequel ladite chambre de combustion est allumée et ledit arbre du générateur de gaz tourne à une vitesse comprise entre 60 et 80% de la vitesse nominale. Ce régime est référencé comme le régime 5 sur la figure 2.

Le régime à la priorité suivante est le régime de veille, dit super-ralenti usuel, dans lequel ladite chambre de combustion est allumée et ledit arbre du générateur de gaz tourne à une vitesse comprise entre 20 et 60% de la vitesse nominale. Ce régime est référencé comme le régime 4 sur la figure 2.

Le régime à la priorité suivante est le régime de veille, dit super-ralenti assisté, dans lequel ladite chambre de combustion est allumée et ledit arbre du générateur de gaz tourne, assisté mécaniquement, à une vitesse comprise entre 20 et 60% de la vitesse nominale. Ce régime est référencé comme le régime 3 sur la figure 2.

Le régime à la priorité suivante est le régime de veille, dit vireur, dans lequel ladite chambre de combustion est éteinte et ledit arbre du générateur de gaz tourne, assisté mécaniquement, à une vitesse comprise entre 5 et 20% de la vitesse nominale. Ce régime est référencé comme le régime 2 sur la figure 2.

Le régime à la priorité suivante est le régime de veille, dit d'arrêt, dans lequel ladite chambre de combustion est éteinte et ledit arbre du générateur de gaz est à l'arrêt complet. Ce régime est référencé comme le régime 1 sur la figure 2.

Aussi, à l'issue de l'étape 12 d'attribution, les données A et C désignent le régime de super-ralenti usuel. La donnée B désigne le régime vireur. La donnée D désigne le régime ralenti usuel et la donnée E désigne le régime de sortie de veille normale.

L'étape 13 de détermination du régime élu choisit le régime parmi l'ensemble des régimes désignés celui qui présente la priorité la plus haute. En d'autres termes, et dans le cas de l'exemple, l'étape 13 de détermination choisit le régime qui a la plus haute priorité parmi l'ensemble formé du régime de super-ralenti usuel, du régime vireur, du régime de ralenti usuel et du régime de sortie de veille normale.

Dans le cas présent, le régime à la priorité la plus haute est le régime de sortie de veille normale.

Aussi, l'étape de commande 14 consiste à ordonner la mise du turbomoteur sélectionné à l'étape 11 de sélection dans le régime de sortie de veille normale.

Le même processus est répété à intervalle régulier et prédéterminé pour adapter le régime de fonctionnement du turbomoteur à l'évolution des données reçues par l'étape de réception.

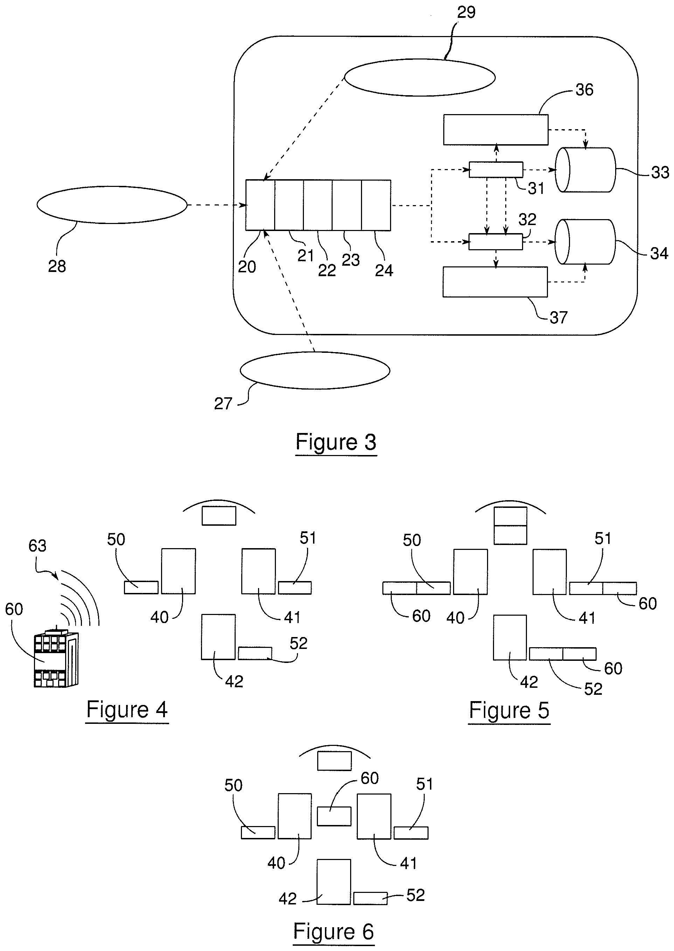

La figure 3 est une vue schématique d'un dispositif de commande selon un mode de réalisation de l'invention.

Le dispositif de commande comprend un module 20 de réception de données représentatives du vol de l'hélicoptère, un module 21 de sélection du turbomoteur pour lequel un changement de régime serait le plus pertinent, un module 22 d'attribution à chaque donnée reçue par ledit module 20 de réception d'un régime de fonctionnement désigné, un module 23 de détermination d'un régime de fonctionnement élu choisi parmi la pluralité de régimes de fonctionnement désignés et un module 24 de commande du régime de fonctionnement du turbomoteur au régime élu

Les données reçues par le module 20 de réception sont selon le mode de réalisation des figures des données 27 de conditions de vol de l'hélicoptère, des données 28 de conditions environnementales de l'hélicoptère et des données 29 d'état du turbomoteur.

Une fois le régime élu déterminé par le module 23 de détermination, le module 24 de commande envoie la commande de changement de régime au régulateur électronique du turbomoteur choisi : soit le régulateur électronique 31 du turbomoteur qui pilote la turbine 33 à gaz du turbomoteur, soit le régulateur électronique 32 du turbomoteur qui pilote la turbine 34 à gaz du turbomoteur. Les régulateurs électroniques 31 et 32 sont également adaptés pour piloter les organes 36 et 37 non propulsifs des turbines 33 et 34 à gaz.

Selon le mode de réalisation de la figure 3, le dispositif de commande pilote les régimes de fonctionnement d'un hélicoptère qui comprend deux turbomoteurs, chaque turbomoteur comprenant une turbine à gaz 33, 34, pilotée par un régulateur 31, 32 électronique (plus connue sous la dénomination anglaise EECU). Chaque régulateur 31, 32 pilote les organes 35, 36 non propulsifs de la turbine à gaz et la turbine 33, 34 à gaz correspondante.

Selon un autre mode de réalisation et tel que représenté sur les figures 4, 5 et 6, le dispositif 60 de commande pilote le choix des régimes de fonctionnement d'un hélicoptère comprenant trois turbomoteurs 40, 41, 42.

Selon le mode de réalisation de la figure 4, le dispositif 60 de commande est extérieur aux turbomoteurs 40, 41, 42 et communique par liaison 63 sans fil avec chaque dispositif 50, 51, 52 de régulation de chaque turbomoteur. Sur la figure 4, seule la liaison 63 entre le dispositif 60 de commande et le dispositif 50 de régulation du turbomoteur 40 est représentée à des fins de clarté. Cela étant, le dispositif 60 de commande communique avec chaque dispositif de régulation pour pouvoir commander un changement de régime de fonctionnement du turbomoteur associé si les données l'imposent.

Selon le mode de réalisation de la figure 5, le dispositif 60 de commande est réparti dans les calculateurs moteurs et l'avionique hélicoptère.

Selon le mode de réalisation de la figure 6, le dispositif 60 de commande est logé dans un boitier dédié.

L'invention ne se limite pas aux seuls modes de réalisation décrits. En particulier, d'autres types d'architectures sont possibles pour le logement du dispositif de commande. En outre, un procédé et un dispositif de commande selon l'invention peuvent servir à commander un hélicoptère comprenant un nombre différent de turbomoteurs et/ou présentant un nombre différent de régimes de fonctionnement.

## Revendications

1. Procédé de commande automatique du régime de fonctionnement d'un turbomoteur d'un hélicoptère qui n'est pas en situation critique de vol et qui comprend au moins deux turbomoteurs, le procédé comprenant :
- une étape (10) de réception de données (27, 28, 29) représentatives du vol de l'hélicoptère,
- une étape (13) de détermination d'un régime de fonctionnement dudit turbomoteur, dit régime élu, choisi parmi une pluralité de régimes de fonctionnement prédéterminés en fonction desdites données représentatives du vol de l'hélicoptère,
- une étape (14) de commande du régime de fonctionnement dudit turbomoteur audit régime élu,
- une étape (12) d'attribution à chaque donnée reçue d'un régime de fonctionnement choisi parmi ladite pluralité de régimes de fonctionnement, dit régime désigné, qui dépend de la valeur de ladite donnée,
dans lequel ladite étape (13) de détermination d'un régime élu consiste à choisir ledit régime élu parmi l'ensemble desdits régimes désignés fournis par ladite étape (12) d'attribution, selon un ordre de priorité prédéterminé, le turbomoteur comprenant une chambre de combustion et un arbre moteur, le procédé étant **caractérisé en ce que** ladite pluralité de régimes de fonctionnement prédéterminés comprend au moins les régimes suivants :
- un régime de veille, dit ralenti usuel, dans lequel ladite chambre de combustion est allumée et ledit arbre du générateur de gaz tourne à une vitesse comprise entre 60 et 80% de la vitesse nominale,
- un régime de veille, dit super-ralenti usuel, dans lequel ladite chambre de combustion est allumée et ledit arbre du générateur de gaz tourne à une vitesse comprise entre 20 et 60% de la vitesse nominale,
- un régime de veille, dit super-ralenti assisté, dans lequel ladite chambre de combustion est allumée et ledit arbre du générateur de gaz tourne, assisté mécaniquement, à une vitesse comprise entre 20 et 60% de la vitesse nominale,
- un régime de veille, dit vireur, dans lequel ladite chambre de combustion est éteinte et ledit arbre du générateur de gaz tourne, assisté mécaniquement, à une vitesse comprise entre 5 et 20% de la vitesse nominale,
- un régime de veille, dit d'arrêt, dans lequel ladite chambre de combustion est éteinte et ledit arbre du générateur de gaz est à l'arrêt complet,
- un régime de sortie de veille d'urgence, dans lequel la chambre de combustion est allumée et l'arbre du générateur de gaz est entraîné vers une vitesse comprise entre 80 et 105%, dans un délai inférieur à 10s après une commande de sortie de veille,
- un régime de sortie de veille normale, dans lequel la chambre de combustion est allumée et l'arbre du générateur de gaz est entraîné vers une vitesse comprise entre 80 et 105%, dans un délai compris entre 10s et 1min après une commande de sortie de veille,
- un régime nominal de fonctionnement, dans lequel la chambre de combustion est allumée et l'arbre du générateur de gaz est entraîné à une vitesse comprise entre 80 et 105%, et **en ce que**
ledit ordre de priorité prédéterminé est le suivant:
- régime nominal de fonctionnement,
- régime de sortie de veille d'urgence,
- régime de sortie de veille normale,
- régime de ralenti usuel,
- régime de super-ralenti usuel,
- régime de super-ralenti assisté,
- régime vireur,
- régime d'arrêt.

2. Procédé selon la revendication 1, **caractérisé en ce que** pour chaque donnée, un régime désigné est associé à un intervalle de valeurs de cette donnée.

3. Procédé de commande selon l'une des revendication 1 ou 2, **caractérisé en ce que** lesdites données représentatives du vol de l'hélicoptère comprennent des données (27) de conditions de vol dudit hélicoptère et/ou des données (28) de conditions environnementales de l'hélicoptère et/ou des données (29) d'état dudit turbomoteur.

4. Procédé de commande selon l'une des revendications 1 à 3, **caractérisé en ce qu'**il comprend en outre une étape (11) de sélection d'un turbomoteur parmi lesdits turbomoteurs dudit hélicoptère, pour lequel un changement de régime serait le plus pertinent.

5. Dispositif de commande automatique d'un régime de fonctionnement d'un turbomoteur d'un hélicoptère qui comprend au moins deux turbomoteurs, ledit dispositif étant configuré pour commander le turbomoteur lorsque l'hélicoptère n'est pas en situation critique de vol, ledit dispositif comprenant :
- un module (20) de réception de données représentatives du vol de l'hélicoptère,
- un module (23) de détermination d'un régime de fonctionnement dudit turbomoteur, dit régime élu, choisi parmi une pluralité de régimes de fonctionnement prédéterminés, en fonction desdites données représentatives du vol de l'hélicoptère,
- un module (24) de commande dudit régime de fonctionnement dudit turbomoteur audit régime élu,
- un module (22) d'attribution à chaque donnée reçue par ledit module (20) de réception d'un régime de fonctionnement choisi parmi ladite pluralité de régimes de fonctionnement, dit régime désigné, qui dépend de la valeur de ladite donnée,
dans lequel ledit module (23) de détermination est configuré pour choisir ledit régime élu parmi l'ensemble desdits régimes désignés fournis par ledit module (22) d'attribution, selon un ordre de priorité prédéterminé, le turbomoteur comprenant une chambre de combustion et un arbre moteur, ledit dispositif étant **caractérisé en ce que** ladite pluralité de régimes de fonctionnement prédéterminés comprend au moins les régimes suivants :
- un régime de veille, dit ralenti usuel, dans lequel ladite chambre de combustion est allumée et ledit arbre du générateur de gaz tourne à une vitesse comprise entre 60 et 80% de la vitesse nominale,
- un régime de veille, dit super-ralenti usuel, dans lequel ladite chambre de combustion est allumée et ledit arbre du générateur de gaz tourne à une vitesse comprise entre 20 et 60% de la vitesse nominale,
- un régime de veille, dit super-ralenti assisté, dans lequel ladite chambre de combustion est allumée et ledit arbre du générateur de gaz tourne, assisté mécaniquement, à une vitesse comprise entre 20 et 60% de la vitesse nominale,
- un régime de veille, dit vireur, dans lequel ladite chambre de combustion est éteinte et ledit arbre du générateur de gaz tourne, assisté mécaniquement, à une vitesse comprise entre 5 et 20% de la vitesse nominale,
- un régime de veille, dit d'arrêt, dans lequel ladite chambre de combustion est éteinte et ledit arbre du générateur de gaz est à l'arrêt complet,
- un régime de sortie de veille d'urgence, dans lequel la chambre de combustion est allumée et l'arbre du générateur de gaz est entraîné vers une vitesse comprise entre 80 et 105%, dans un délai inférieur à 10s après une commande de sortie de veille,
- un régime de sortie de veille normale, dans lequel la chambre de combustion est allumée et l'arbre du générateur de gaz est entraîné vers une vitesse comprise entre 80 et 105%, dans un délai compris entre 10s et 1min après une commande de sortie de veille,
- un régime nominal de fonctionnement, dans lequel la chambre de combustion est allumée et l'arbre du générateur de gaz est entraîné à une vitesse comprise entre 80 et 105%,
et **en ce que** ledit ordre de priorité prédéterminé est le suivant:
- régime nominal de fonctionnement,
- régime de sortie de veille d'urgence,
- régime de sortie de veille normale,
- régime de ralenti usuel,
- régime de super-ralenti usuel,
- régime de super-ralenti assisté,
- régime vireur,
- régime d'arrêt.

6. Dispositif de commande selon la revendication 5, **caractérisé en ce qu'**il comprend en outre un module (21) de sélection d'un turbomoteur parmi lesdits turbomoteurs dudit hélicoptère, pour lequel un changement de régime serait le plus pertinent.

7. Hélicoptère comprenant au moins deux turbomoteurs (40, 41, 42), chaque turbomoteur comprenant une turbine à gaz piloté par un dispositif (50, 51, 52) de régulation, **caractérisé en ce qu'**il comprend un dispositif (60) de commande selon l'une des revendications 5 ou 6.

8. Hélicoptère selon la revendication 7, **caractérisé en ce que** ledit dispositif (60) de commande est logé dans ledit dispositif (50, 51, 52) de régulation de chaque turbomoteur (40, 41, 42).

9. Hélicoptère selon l'une des revendications 7 ou 8, **caractérisé en ce que** ledit dispositif (60) de commande communique par liaison (63) sans fil avec chaque dispositif (50, 52, 53) de régulation de chaque turbomoteur (40, 41, 42).

## Patentansprüche

1. Verfahren zur automatischen Steuerung der Betriebsart ein Gasturbinentriebwerk eines Hubschraubers, der nicht in einer kritischen Flugsituation ist und der mindestens zwei Gasturbinentriebwerke umfasst, wobei das Verfahren umfasst:
- einen Schritt des Empfangens (10) von Angaben (27, 28, 29), die repräsentativ sind für den Hubschrauberflug,
- einen Schritt des Bestimmens (13) einer Betriebsart des Wellentriebwerks, als gewählter Betrieb bezeichnet, ausgewählt aus einer Vielzahl von vorbestimmten Betriebsarten, in Abhängigkeit von den Angaben, die repräsentativ sind für den Hubschrauberflug,
- einen Schritt des Steuerns (14) der Betriebsart das Gasturbinentriebwerk beim gewählten Betrieb,
- einen Schritt des Zuordnens (12), zu jeder empfangenen Angabe, einer Betriebsart, ausgewählt aus der Vielzahl von Betriebsarten, als designierter Betrieb bezeichnet, die vom Wert der Angabe abhängt,
wobei der Schritt des Bestimmens (13) eines gewählten Betriebs aus einem Auswählen des gewählten Betriebs aus der Gesamtheit der designierten Betriebe, die durch den Schritt des Zuordnens (12) bereitgestellt werden, nach einer vorbestimmten Rangordnung besteht,
wobei das Gasturbinentriebwerk eine Brennkammer und eine Motorwelle umfasst, wobei das Verfahren **dadurch gekennzeichnet ist, dass** die Vielzahl von vorbestimmten Betriebsarten mindestens die folgenden Betriebe umfasst:
- einen Bereitschaftsbetrieb, als gewöhnlicher Leerlauf bezeichnet, bei dem die Brennkammer entzündet ist und die Gasgeneratorwelle bei einer Geschwindigkeit zwischen 60 und 80 % der nominalen Geschwindigkeit dreht,
- einen Bereitschaftsbetrieb, als gewöhnlicher Hochleerlauf bezeichnet, bei dem die Brennkammer entzündet ist und die Gasgeneratorwelle bei einer Geschwindigkeit zwischen 20 und 60 % der nominalen Geschwindigkeit dreht,
- einen Bereitschaftsbetrieb, als gestützter Hochleerlauf bezeichnet, bei dem die Brennkammer entzündet ist und die Gasgeneratorwelle mechanisch gestützt bei einer Geschwindigkeit zwischen 20 und 60 % der nominalen Geschwindigkeit dreht,
- einen Bereitschaftsbetrieb, als drehender Betrieb bezeichnet, bei dem die Brennkammer gelöscht ist und die Gasgeneratorwelle mechanisch gestützt bei einer Geschwindigkeit zwischen 5 und 20 % der nominalen Geschwindigkeit dreht,
- einen Bereitschaftsbetrieb, als Stillstand bezeichnet, bei dem die Brennkammer gelöscht ist und die Gasgeneratorwelle vollkommen stillsteht,
- einen Betrieb zum dringenden Verlassen der Bereitschaft, bei dem die Brennkammer entzündet ist und die Gasgeneratorwelle in einem Zeitraum unter 10 s nach einer Steuerung zum Verlassen der Bereitschaft auf eine Geschwindigkeit zwischen 80 und 105 % hochgefahren wird,
- einen Betrieb zum normalen Verlassen der Bereitschaft, bei dem die Brennkammer entzündet ist und die Gasgeneratorwelle in einem Zeitraum zwischen 10 s und 1 min nach einer Steuerung zum Verlassen der Bereitschaft auf eine Geschwindigkeit zwischen 80 und 105 % hochgefahren wird,
- eine nominale Betriebsart, bei der die Brennkammer entzündet ist und die Gasgeneratorwelle bei einer Geschwindigkeit zwischen 80 und 105 % angetrieben wird,
und dadurch, dass die Rangordnung die folgende ist:
- nominale Betriebsart,
- Betrieb zum dringenden Verlassen der Bereitschaft,
- Betrieb zum normalen Verlassen der Bereitschaft,
- gewöhnlicher Leerlaufbetrieb,
- gewöhnlicher Hochleerlaufbetrieb,
- gestützter Hochleerlaufbetrieb,
- drehender Betrieb,
- Stillstandbetrieb.

2. Verfahren nach Anspruch 1, **dadurch gekennzeichnet, dass** für jede Angabe, ein designierter Betrieb mit einem Werteintervall dieser Angabe verknüpft ist.

3. Verfahren zur Steuerung nach einem der Ansprüche 1 oder 2, **dadurch gekennzeichnet, dass** die Angaben, die repräsentativ sind für den Hubschrauberflug, Angaben (27) zu den Flugbedingungen des Hubschraubers und/oder Angaben (28) zu den Umweltbedingungen des Hubschraubers und/oder Angaben zum Zustand (29) das Gasturbinentriebwerk umfassen

4. Verfahren zur Steuerung nach einem der Ansprüche 1 bis 3 **dadurch gekennzeichnet, dass** es weiter einen Schritt der Selektion (11) ein Gasturbinentriebwerk aus die Gasturbinentriebwerken des Hubschraubers umfasst, für das eine Betriebsänderung am sinnvollsten wäre.

5. Einrichtung zur automatischen Steuerung einer Betriebsart ein Gasturbinentriebwerk eines Hubschraubers, der mindestens zwei Gasturbinentriebwerke umfasst, wobei die Einrichtung konfiguriert ist, um das Gasturbinentriebwerk zu steuern, wenn der Hubschrauber nicht in einer kritischen Flugsituation ist, wobei die Einrichtung umfasst:
- ein Modul zum Empfangen (20) von Angaben, die repräsentativ sind für den Flug des Hubschraubers,
- ein Modul zum Bestimmen (23) einer Betriebsart des Gasturbinentriebwerks, als gewählter Betrieb bezeichnet, ausgewählt aus einer Vielzahl von vorbestimmten Betriebsarten, in Abhängigkeit von den Angaben, die repräsentativ sind für den Flug des Hubschraubers,
- ein Modul zum Steuern (24) der Betriebsart des Gasturbinentriebwerksbeim gewählten Betrieb,
- ein Modul zum Zuordnen (22), zu jeder vom Modul zum Empfangen (20) empfangenen Angabe, einer Betriebsart, ausgewählt aus der Vielzahl von Betriebsarten, als designierter Betrieb bezeichnet, die vom Wert der Angabe abhängt,
wobei das Modul zum Bestimmen (23) konfiguriert ist, um den gewählten Betrieb aus der Gesamtheit der designierten Betriebe, die vom Modul zum Zuordnen (22) bereitgestellt werden, nach einer vorbestimmten Rangordnung auszuwählen, wobei das Gasturbinentriebwerk eine Brennkammer und eine Motorwelle umfasst, wobei die Einrichtung **dadurch gekennzeichnet ist, dass** die Vielzahl von vorbestimmten Betriebsarten mindestens die folgenden Betriebe umfasst:
- einen Bereitschaftsbetrieb, als gewöhnlicher Leerlauf bezeichnet, bei dem die Brennkammer entzündet ist und die Gasgeneratorwelle bei einer Geschwindigkeit zwischen 60 und 80 % der nominalen Geschwindigkeit dreht,
- einen Bereitschaftsbetrieb, als gewöhnlicher Hochleerlauf bezeichnet, bei dem die Brennkammer entzündet ist und die Gasgeneratorwelle bei einer Geschwindigkeit zwischen 20 und 60 % der nominalen Geschwindigkeit dreht,
- einen Bereitschaftsbetrieb, als gestützter Hochleerlauf bezeichnet, bei dem die Brennkammer entzündet ist und die Gasgeneratorwelle mechanisch gestützt bei einer Geschwindigkeit zwischen 20 und 60 % der nominalen Geschwindigkeit dreht,
- einen Bereitschaftsbetrieb, als drehender Betrieb bezeichnet, bei dem die Brennkammer gelöscht ist und die Gasgeneratorwelle mechanisch gestützt bei einer Geschwindigkeit zwischen 5 und 20 % der nominalen Geschwindigkeit dreht,
- einen Bereitschaftsbetrieb, als Stillstand bezeichnet, bei dem die Brennkammer gelöscht ist und die Gasgeneratorwelle vollkommen stillsteht,
- einen Betrieb zum dringenden Verlassen der Bereitschaft, bei dem die Brennkammer entzündet ist und die Gasgeneratorwelle in einem Zeitraum unter 10 s nach einer Steuerung zum Verlassen der Bereitschaft auf eine Geschwindigkeit zwischen 80 und 105 % hochgefahren wird,
- einen Betrieb zum normalen Verlassen der Bereitschaft, bei dem die Brennkammer entzündet ist und die Gasgeneratorwelle in einem Zeitraum zwischen 10 s und 1 min nach einer Steuerung zum Verlassen der Bereitschaft auf eine Geschwindigkeit zwischen 80 und 105 % hochgefahren wird,
- eine nominale Betriebsart, bei der die Brennkammer entzündet ist und die Gasgeneratorwelle bei einer Geschwindigkeit zwischen 80 und 105 % angetrieben wird,
und dadurch, dass die Rangordnung die folgende ist:
- nominale Betriebsart,
- Betrieb zum dringenden Verlassen der Bereitschaft,
- Betrieb zum normalen Verlassen der Bereitschaft,
- gewöhnlicher Leerlaufbetrieb,
- gewöhnlicher Hochleerlaufbetrieb,
- gestützter Hochleerlaufbetrieb,
- drehender Betrieb,
- Stillstandbetrieb.

6. Einrichtung zur Steuerung nach Anspruch 5, **dadurch gekennzeichnet, dass** sie weiter ein Modul zur Selektion (21) ein Gasturbinentriebwerk unter die Gasturbinentriebwerken des Hubschraubers umfasst, für das eine Betriebsänderung am sinnvollsten wäre.

7. Hubschrauber, umfassend mindestens zwei Gasturbinentriebwerke (40, 41, 42), wobei jedes Gasturbinentriebwerk eine Gasturbine umfasst, die durch eine Einrichtung zur Regulierung (50, 51, 52) gelenkt wird, **dadurch gekennzeichnet, dass** er eine Einrichtung zur Steuerung (60) nach einem der Ansprüche 5 oder 6 umfasst.

8. Hubschrauber nach Anspruch 7, **dadurch gekennzeichnet, dass** die Einrichtung zur Steuerung (60) in der Einrichtung zur Regulierung (50, 51, 52) jedes Wellentriebwerks (40, 41, 42) untergebracht ist.

9. Hubschrauber nach einem der Ansprüche 7 oder 8, **dadurch gekennzeichnet, dass** die Einrichtung zur Steuerung (60) durch drahtlose Verbindung (63) mit jeder Einrichtung zur Regulierung (50, 52, 53) jedes Gasturbinentriebwerk (40, 41, 42) kommuniziert.

## Claims

1. Method for automatically controlling the operating mode of a turboshaft engine of a helicopter that is not in a critical flight situation and comprises at least two turboshaft engines, the method comprising:
- a step (10) of receiving data (27, 28, 29) that are representative of the flight of the helicopter,
- a step (13) of determining an operating mode of said turboshaft engine, known as the selected mode, selected from a plurality of predetermined operating modes on the basis of said data that are representative of the flight of the helicopter,
- a step (14) of ordering the operating mode of said turboshaft engine into said selected mode,
- a step (12) of allocating, to each item of data received, an operating mode, known as the designated mode, that is selected from said plurality of operating modes and depends on the value of said item of data,
wherein said step (13) of determining a selected mode consists in selecting said selected mode from all of said designated modes provided by said allocation step (12), according to a predetermined order of priority,
said turboshaft engine comprising a combustion chamber and an engine shaft, said method being **characterised in that** said plurality of predetermined operating modes comprises at least the following modes:
- a standby mode known as normal idling, in which said combustion chamber is ignited and said shaft of the gas generator rotates at a speed of between 60 and 80 % of the nominal speed,
- a standby mode known as normal super-idling, in which said combustion chamber is ignited and said shaft of the gas generator rotates at a speed of between 20 and 60 % of the nominal speed,
- a standby mode known as assisted super-idling, in which said combustion chamber is ignited and said shaft of the gas generator rotates, in a mechanically assisted manner, at a speed of between 20 and 60 % of the nominal speed,
- a standby mode known as banking, in which said combustion chamber is extinguished and said shaft of the gas generator rotates, in a mechanically assisted manner, at a speed of between 5 and 20 % of the nominal speed,
- a standby mode known as stopping, in which said combustion chamber is extinguished and said shaft of the gas generator is completely stopped,
- an urgent standby-leaving mode, in which the combustion chamber is ignited and the shaft of the gas generator is brought to a speed of between 80 and 105 % within a period of less than 10 seconds following an order to leave standby mode,
- a normal standby-leaving mode, in which the combustion chamber is ignited and the shaft of the gas generator is brought to a speed of between 80 and 105 % within a period of between 10 seconds and 1 minute following an order to leave standby mode,
- a nominal operating mode, in which the combustion chamber is ignited and the shaft of the gas generator is driven at a speed of between 80 and 105 %,
and **in that** said predetermined order of priority is as follows:
- nominal operating mode,
- urgent standby-leaving mode,
- normal standby-leaving mode,
- normal idling mode,
- normal super-idling mode,
- assisted super-idling mode,
- banking mode,
- stopping mode.

2. Method according to claim 1, **characterised in that**, for each item of data, a designated mode is associated with a range of values of said item of data.

3. Control method according to any of claims 1 or 2, **characterised in that** said data that are representative of the flight of the helicopter comprise data (27) about the flight conditions of said helicopter and/or data (28) about the environmental conditions of the helicopter and/or data (29) about the state of said turboshaft engine.

4. Control method according to any of claims 1 to 3, **characterised in that** it further comprises a step (11) of selecting one turboshaft engine from said turboshaft engines of said helicopter for which a change of mode would be most relevant.

5. Device for automatically controlling an operating mode of a turboshaft engine of a helicopter that comprises at least two turboshaft engines, said device being designed to control said turboshaft engine of a helicopter when it is not in a critical flight situation, said device comprising:
- a module (20) for receiving data that are representative of the flight of the helicopter,
- a module (23) for determining an operating mode of said turboshaft engine, known as the selected mode, selected from a plurality of predetermined operating modes on the basis of said data that are representative of the flight of the helicopter,
- a module (24) for ordering said operating mode of said turboshaft engine into said selected mod,
- a module (22) for allocating, to each item of data received by said reception module (20), an operating mode, known as the designated mode, that is selected from said plurality of operating modes and depends on the value of said item of data,
wherein said determination module (23) is designed to select said selected mode from all of said designated modes provided by said allocation module (22), according to a predetermined order of priority,
said turboshaft engine comprising a combustion chamber and an engine shaft, said device being **characterised in that** said plurality of predetermined operating modes comprises at least the following modes:
- a standby mode known as normal idling, in which said combustion chamber is ignited and said shaft of the gas generator rotates at a speed of between 60 and 80 % of the nominal speed,
- a standby mode known as normal super-idling, in which said combustion chamber is ignited and said shaft of the gas generator rotates at a speed of between 20 and 60 % of the nominal speed,
- a standby mode known as assisted super-idling, in which said combustion chamber is ignited and said shaft of the gas generator rotates, in a mechanically assisted manner, at a speed of between 20 and 60 % of the nominal speed,
- a standby mode known as banking, in which said combustion chamber is extinguished and said shaft of the gas generator rotates, in a mechanically assisted manner, at a speed of between 5 and 20 % of the nominal speed,
- a standby mode known as stopping, in which said combustion chamber is extinguished and said shaft of the gas generator is completely stopped,
- an urgent standby-leaving mode, in which the combustion chamber is ignited and the shaft of the gas generator is brought to a speed of between 80 and 105 % within a period of less than 10 seconds following an order to leave standby mode,
- a normal standby-leaving mode, in which the combustion chamber is ignited and the shaft of the gas generator is brought to a speed of between 80 and 105 % within a period of between 10 seconds and 1 minute following an order to leave standby mode,
- a nominal operating mode, in which the combustion chamber is ignited and the shaft of the gas generator is driven at a speed of between 80 and 105 %,
and **in that** said predetermined order of priority is as follows:
- nominal operating mode,
- urgent standby-leaving mode,
- normal standby-leaving mode,
- normal idling mode,
- normal super-idling mode,
- assisted super-idling mode,
- banking mode,
- stopping mode.

6. Control device according to claim 5, **characterised in that** it further comprises a module (21) for selecting one turboshaft engine from said turboshaft engines of said helicopter for which a change of mode would be most relevant.

7. Helicopter comprising at least two turboshaft engines (40, 41, 42), each turboshaft engine comprising a gas turbine controlled by a regulating device (50, 51, 52), **characterised in that** it comprises a control device (60) according to any of claims 5 or 6.

8. Helicopter according to claim 7, **characterised in that** said control device (60) is received in said regulating device (50, 51, 52) of each turboshaft engine (40, 41, 42).

9. Helicopter according to either claim 7 or claim 8, **characterised in that** said control device (60) communicates, via a wireless connection (63), with each regulating device (50, 52, 53) of each turboshaft engine (40, 41, 42).
